# EUROPÄISCHE PATENTSCHRIFT

(11) **EP 0 274 986 B1**
(45) Veröffentlichungstag und Bekanntmachung des Hinweises auf die Patenterteilung: **03.03.1993**
(21) Anmeldenummer: 87810704.4
(22) Anmeldetag: 30.11.1987
(51) Int. Cl.: B01D 53/34

(54) **Abluftreinigungsverfahren**
Waste gas purification process
Procédé de purification de gaz d'échappement

(30) Priorität: 05.12.1986 CH 4864/86
(43) Veröffentlichungstag der Anmeldung: 20.07.1988
(73) Patentinhaber: CIBA-GEIGY AG, 4002 Basel (CH)
(72) Erfinder: Bentz, Rolf, Dr., CH-4058 Basel (CH)

(56) Entgegenhaltungen:
- EP-A- 0 142 872
- GB-A- 2 067 092

## Beschreibung

Die Anmeldung betrifft ein neues Verfahren, eine Vorrichtung sowie deren Verwendung zur Entsorgung und Reinigung von mit Schadstoffen belasteter Abluft.

Der Einsatz von Biofiltern zur Reinigung der Abluft ist bekannt. So werden in den VDI-Richtlinien 3477 Verfahren zur biologischen Abluftreinigung in zum Beispiel Müllkompostwerken oder Tierkörperverwertungsanstalten erwähnt.

Die nach diesen Verfahren arbeitenden Anlagen können jedoch je nach Filtervolumen und Durchsatzgeschwindigkeit nur eine bestimmte Menge an organischer Last abbauen. Da sie keine bzw. eine sehr geringe Pufferkapazität besitzen, steigt die Konzentration von nicht abgebauten Schadstoffen bei erhöhter Belastung entsprechend an. D.h. die dort beschriebenen Biofilteranlagen sind nicht für einen Einsatz geeignet, bei dem stossweise Belastungen mit hohen Schadstoffkonzentrationen auftreten.

Aus der EP-A-0 142 872 ist ein Verfahren bekannt, bei welchem dem Biofiltermaterial Aktivkohle hinzugefügt wird. Dadurch besteht die Gefahr des Bewuchses der Aktivkohle durch die Mikroorganismen des Biofilters. Die daraus resultierende Verminderung der Reinigungskapazität der Aktivkohle führt zu einer erhöhten Gefahr des Durchschlagens.

Gegenstand der vorliegenden Anmeldung ist hingegen ein neues Verfahren gemäß dem Oberbegriff von Anspruch 1, dadurch gekennzeichnet, daß die Abluft zuerst durch mindestens einen Puffer und anschließend durch mindestens einen Biofilter geleitet wird, wobei das Adsorptionsmittel und das Biofiltermaterial getrennt voneinander angeordnet sind.

Das Verfahren kann auch ohne Gefahr des Durchschlagens in Bereichen (z.B. Chemische Industrie, Lackierereien, Giessereien) eingesetzt werden, in denen häufig Konzentrationsspitzen an Schadstoffen enthaltender Abluft auftreten.

Unter schadstoffbelasteter Abluft sollen im folgenden Gase, Aerosole und Dämpfe verstanden werden, die beispielsweise in konzentrierter Form bei industriellen Prozessen oder in Tanklagern, sowie in mit Luft verdünnter Form in der Raumluft oder in Abzügen von Laboratorien, Produktions- oder Lagerhallen auftreten.

Bei den Schadstoffen handelt es sich dabei um anorganische oder organische Verbindungen. Vorzugsweise um organische Verbindungen wie zum Beispiel Kohlenwasserstoffe oder halogenierte Kohlenwasserstoffe wie z.B. Alkane oder Cycloalkane mit 1 bis 12 Kohlenstoffatomen, oder Aromaten, Aldehyde, Ketone, Ether, Carbonsäureester, Sulfone, Alkohole, Thiole, Nitro- oder Aminoverbindungen oder um Gemische. Insbesondere aber um z.B. Butan, Pentan, Heptan, Octan, Cyclohexan, Cyclooctan, Dekalin, Methylenchlorid, Benzol, Toluol, Phenol, Xylol, Chlorbenzol, Dichlorbenzol, Aceton, Dioxan, Sulfolan, Tetrahydrofuran, Methylisobutylketon, Methanol, Ethanol, Butanol, Pyridin, Dimethylformamid, Acetonitril oder um Gemische.

Als anorganische Verbindungen seien zum Beispiel H₂S, NH₃ und HCN erwähnt.

Der Abbau der Abluft erfolgt in den Biofiltern. Diese Biofilter enthalten Mikroorganismen z.B. aus Belebtschlamm von Kläranlagen und ein Trägermaterial, das die Mikroorganismen ausreichend mit Nährstoffen versorgen kann.

Als Trägermaterial werden beispielsweise Kompost, Torf, Erde, Holzschnitzel, Pflanzenreste wie Reisig, Stroh, Baumrinde oder Heidekraut, oder Mischungen, bevorzugt eine Mischung aus Fasertorf, Heidekraut und Tannenreisig, verwendet.

Da der mikrobiologische Abbau in wässriger Phase stattfindet, muss das Trägermaterial feucht sein. Dies erreicht man gegebenenfalls durch eine Vorrichtung zum Befeuchten der Biofilter, vorzugsweise dadurch, dass die Abluft vor dem Eintritt in ein Biofilter durch einen Befeuchter geleitet wird oder dass über eine Düse Wasser in den Abluftstrom eingespritzt wird.

Gleichzeitig kann hier der eventuell heisse oder hochkonzentrierte schadstoffhaltige Abluftstrom auf eine für die Mikroorganismen in den Biofiltern unschädliche Temperatur und Verdünnung gebracht werden.

Zum Beispiel werden pro m³ Biofiltervolumen und Stunde, 1 m³ Abluft mit einer Schadstoffkonzentration von bis zu 50 g geleitet.

Die Temperatur der Abluft beträgt vorzugsweise 15 bis 40°C.

Erfindungswesentlich für das Verfahren ist, dass sich im Biofiltersystem mindestens ein Puffer befindet.

Dieser oder diese Puffer können vor, zwischen oder vor und zwischen gegebenenfalls mehreren Biofiltern angeordnet sein.

Die gegebenenfalls stossweise anfallenden Schadstoffe oder Schadstoffgemische gelangen mit der Abluft in den Puffer, dort werden sie gespeichert und kontinuierlich an ein Biofiltersystem abgegeben.

Das Verhältnis von Puffervolumen zu Biofiltervolumen liegt beispielsweise zwischen 50:1 bis 1:50.

In einer bevorzugten Ausführungsform ist der Puffer zwischen mindestens zwei Biofiltern angeordnet.

Bei dieser Variante werden die Schadstoffe zuerst in gegebenenfalls mehreren Biofiltern entsprechend ihrer Kapazität abgebaut. Erhöht sich die Schadstoffkonzentration in der Abluft bzw. deren Durchsatzgeschwindigkeit, so schlägt der Filter durch und die nicht abgebauten Schadstoffe erreichen gegebenenfalls mehrere Puffer.

Wenn die Menge an Schadstoff in der Abluft wieder zurückgeht, also in einer Phase in der keine neuen Substanzen in den Puffer gelangen, da der vorgeschaltete Biofilter wieder zufriedenstellend arbeitet, werden die gespeicherten Schadstoffe kontinuierlich an gegebenenfalls mehrere hinter dem Puffer angeordnete Biofilter abgegeben und dort mikrobiologisch zersetzt.

Bei Verwendung eines Adsorptionsmittels oder Gemisches als Puffer regelt sich dieser Ablauf selbständig durch Einstellung des Adsorbens/Luft Phasengleichgewichtes. Somit wird durch die dabei stattfindende kontinuierliche Desorption auf dem Adsorbens wieder Kapazität zum Auffangen höherer Belastungen frei.

Als Adsorptionsmittel können z.B. Aktiv- oder Knochenkohle, Kieselgel, Kieselgur, Bleicherde, Aluminiumoxide, Molekularsiebe, Bauxit, Glas, Keramik oder Gemische, insbesondere aber Aktivkohle eingesetzt werden.

Erfindungswesentlich ist auch, dass durch die mehr oder weniger gleichmässige Abgabe von Schadstoffen aus einem Puffer in einen Biofilter erreicht wird, dass die Mikroorganismen in diesem Filter ideale Lebensbedingungen vorfinden und somit zu jeder Zeit voll aktiv sind.

Ein weiterer Gegenstand dieser Anmeldung ist eine Vorrichtung zur Durchführung des oben beschriebenen Verfahrens die dadurch gekennzeichnet ist, dass die Abluft durch eine Vorrichtung aus mindestens einem Puffer und mindestens einem nachgeschalteten Biofilter geleitet wird, wobei das als Puffer wirkende Adsorptionsmittel und das aus Trägermaterial und Mikroorganismen bestehende Biofiltermaterial getrennt voneinander angeordnet sind.

Bei der erfindungsgemässen Vorrichtung handelt es sich beispielsweise um einzelne geschlossene Systeme die folgendermassen angeordnet sein können:
a) ein oder mehrere Pufferanlagen befinden sich vor ein oder mehreren Biofiltern
b) ein oder mehrere Pufferanlagen befinden sich zwischen mehreren Biofiltern
c) ein oder mehrere Pufferanlagen befinden sich vor und zwischen mehreren Biofiltern.

Auch eine schichtweise, vorzugsweise schubladenartige, Anordnung der gesamten Vorrichtung a) bzw. b) oder c) ist möglich.

Zweckmässigerweise werden mehrere Biofilter vor einer Pufferanlage parallel geschaltet oder schubladenartig angeordnet. So kann während des Grundlastbetriebs das Trägermaterial in den einzelnen parallel geschalteten Biofiltern bzw. den Schubladen leicht ausgetauscht oder erneuert werden. Die beim Austausch fehlende Kapazität wird von dem nachgeschalteten Pufferanlage-Biofilter System übernommen.

Der Wirkungsgrad der nach dem oben genannten Verfahren arbeitenden Vorrichtung liegt je nach Schadstoffkonzentration und Dauer zwischen 90 und 99,5 %.

Das oben genannte Verfahren bzw. die Vorrichtung zur Durchführung des Verfahrens kann auch zur gezielten Entsorgung, Reinigung und Trennung von Gasen, Aerosolen und Dämpfen eingesetzt werden. Zum Beispiel von in der Produktion anfallenden, nicht wiederverwertbaren Lösungsmitteln oder Lösungsmittelgemischen.

Das erfindungsgemässe Verfahren bzw. die Vorrichtung zur Durchführung des Verfahrens zeichnet sich somit durch eine universelle und kontinuierliche Einsetzbarkeit bei der Reinigung von schadstoffbelasteter Abluft, sowie durch hervorragende Reinigungseigenschaften aus.

Das nachfolgende Beispiel erläutert die Erfindung ohne sie darauf zu beschränken.

### Beispiel

### 1. Apparatur

Die Apparatur besteht aus zwei geschlossenen Biofiltern zwischen denen ein geschlossener Puffer angeordnet ist. Jeder Biofilter hat einen Durchmesser von 0,12 m, eine Füllhöhe von 0,9 m und ein Füllvolumen von 10 l. Als Träger dient ein Fasertorf/Heidekraut Gemisch. Der Puffer hat einen Durchmesser von 0,06 m, eine Füllhöhe von 0,45 m und ein Füllvolumen von 1,3 l. Der Puffer ist mit Aktivkohle (Aerosorb F 40/470) gefüllt. Durch diese Anlage wird ein schadstoffhaltiger Luftstrom geleitet, wobei die gewünschte Schadstoffkonzentration im Luftstrom auf folgende Weise erzeugt wird:
ein Teil der Luft wird über ein Rotameter durch eine z.B. mit Lösungsmittel gefüllte Gaswaschflasche, das restliche Luftvolumen über ein Rotameter durch einen thermostatischen Kolben, gefüllt mit destilliertem Wasser zur Feuchthaltung des Biofilters, geleitet. Die beiden Luftströme werden vor dem Eintritt in das Biofilter vereinigt.

Vor und nach jeder Stufe wird die Schadstoffkonzentration durch eine FID-Messung (Flammen-Ionisations-Detektor) überwacht.

### 2. Versuch

Die Verweilzeit der Luft je Biofilter beträgt 36 s und im Puffer 4,6 s. Der Luftstrom hat eine Temperatur von 28°C, ist mit Toluol belastet und wird mit einem Volumen von 1 m³ pro Stunde durch die Apparatur geleitet.

Während der gesamten Versuchsphase bleibt das Luftvolumen konstant, die Lösungsmittelkonzentration in der Zuluft variiert hingegen stark. Die Zeitdauer, während der eine konstante Lösungsmittelkonzentration in das System eintritt, wird ebenfalls variiert. Auf diese Weise simuliert man einen Abluftstrom, wie er beispielsweise in der chemischen Produktion anfällt. Wird das Lösungsmittel in den Biofiltern abgebaut, so ist die Lösungsmittelkonzentration nach dem Filter kleiner als vor dem Filter. Die Aktivkohle, die als Puffer eingesetzt ist und auf der kein biologischer Abbau erfolgt, arbeitet folgendermassen:
- Bei hoher Lösungsmittelkonzentration in der Zuluft wirkt sie als Adsorber. Die Konzentration beim Eintritt ist grösser als die beim Austritt;
- Bei niedrigen Lösungsmittelkonzentrationen in der Zuluft desorbiert das Lösungsmittel von der Aktivkohle, die Konzentration beim Austritt ist also grösser als die Konzentration beim Eintritt.

Zu Beginn des Versuchs wird die Aktivkohle mit Toluol bis zur Sättigung beladen.

**Tabelle 1**

| Zeitdauer [h] | Schadstoffkonzentration [mg/m³] | | | | | |
|---|---|---|---|---|---|---|
| | Zuluft | Ausgang Biofilter 1 | Abbau % | Ausgang Aktivkohle | Ausgang Biofilter 2 | Abbau % |
| 8,25 | 560 | 36 | 93,5 | 156* | 24 | 97 |
| 15,75 | 230 | 6 | 97,5 | 126 | 6 | 98 |
| 5,75 | 1260 | 660 | 47,5 | 150 | 6 | 99,5 |
| 19,5 | 230 | 6 | 97,5 | 116 | 5 | 98,5 |
| 6 | 1680 | 1080 | 36 | 120 | 6 | 99,5 |
| 16,5 | 225 | 6 | 97 | 150 | 6 | 98,5 |
| 8,5 | 3100 | 2980 | 4 | 480 | 300 | 92 |
| 64 | 300 | 30 | 90 | 240 | 6 | 99 |
| 3,3 | 1920 | 1320 | 31 | 210 | 30 | 98,5 |
| 15,8 | 160 | 6 | 96 | 80 | 6 | 97,5 |
| 8,5 | 2880 | 2090 | 27,5 | 480 | 120 | 96,5 |
| 16,75 | 560 | 360 | 36 | 50 | 6 | 99 |
| 7,35 | 4440 | 3840 | 13,5 | 1230 | 500 | 91 |
| 40 | 270 | 30 | 89 | 330 | 6 | 98 |
| 7,75 | 5220 | 4500 | 14 | 960 | 530 | 91 |

| | | | | | | |
|---|---|---|---|---|---|---|
| * Bei den unterstrichenen Werten tritt auf der Aktivkohle Desorption ein. | | | | | | |

### Beispiel 2:

Es werden die gleichen Versuchsbedingungen und die gleiche Apparatur wie in Beispiel 1 angewendet, mit dem Unterschied, dass man den Luftstrom mit Methyl-iso-butylketon belastet.

**Tabelle 2**

| Zeitdauer [h] | Schadstoffkonzentration [mg/m³] | | | | | |
|---|---|---|---|---|---|---|
| | Zuluft | Ausgang Biofilter 1 | Abbau % | Ausgang Aktivkohle | Ausgang Biofilter 2 | Abbau % |
| 15 | 700 | 390 | 44 | 65 | <10 | >98,5 |
| 33 | 1630 | 1030 | 37 | 820 | 730 | 55 |
| 15 | <10 | <10 | | 370 | 210 | |
| 24 | 2530 | 1970 | 22 | 1520 | 1310 | 48 |
| 16 | <10 | <10 | | 160 | 120 | |
| 23 | 1320 | 940 | 29 | 60 | 15 | 99 |
| 6 | 2560 | 2110 | 18 | 780 | 720 | 72 |
| 18 | <10 | <10 | | 340 | 250 | |
| 9 | 1980 | 1470 | 26 | 650 | 540 | 73 |
| 17 | <10 | <10 | | 370 | 270 | |
| 7 | 1750 | 1240 | 29 | 600 | 510 | 71 |
| * Bei den unterstrichenen Werten tritt auf der Aktivkohle Desorption ein. | | | | | | |

### Beispiel 3:

Es werden die gleichen Versuchsbedingungen und die gleiche Apparatur wie in Beispiel 1 angewendet, mit dem Unterschied, dass man den Luftstrom mit n-Butanol belastet.

**Tabelle 3**

| Zeitdauer [h] | Schadstoffkonzentration [mg/m³] | | | | | |
|---|---|---|---|---|---|---|
| | Zuluft | Ausgang Biofilter 1 | Abbau % | Ausgang Aktivkohle | Ausgang Biofilter 2 | Abbau % |
| 21 | 210 | 80 | | 650 | 490 | |
| 8 | 3060 | 2910 | 5 | 1220 | 540 | 83 |
| 15 | 100 | 60 | | 550 | 410 | |
| 7 | 2790 | 2740 | 2 | 1560 | 790 | 72 |
| 8 | 3380 | 3180 | 6 | 960 | 310 | 91 |
| 16 | 160 | 70 | | 660 | 520 | |
| 7 | 2380 | 2140 | 10 | 1230 | 750 | 68 |
| 68 | <10 | <10 | | 130 | 20 | |
| 5 | 2590 | 1660 | 36 | 220 | 50 | 98 |
| 16 | <10 | <10 | | 140 | <10 | |
| 8 | 2470 | 1850 | 25 | 680 | 350 | 86 |
| 16 | <10 | <10 | | 400 | 230 | |
| 8 | 2470 | 1890 | 23 | 710 | 400 | 84 |
| 16 | <10 | <10 | | 220 | 120 | |
| 8 | 2300 | 1760 | 23 | 670 | 410 | 82 |
| 65 | <10 | <10 | | 120 | 20 | |
| 23 | 2280 | 1380 | 39 | 930 | 660 | 71 |
| * Bei den unterstrichenen Werten tritt auf der Aktivkohle Desorption ein. | | | | | | |

### Beispiel 4:

Es werden die gleichen Versuchsbedingungen und die gleiche Apparatur wie in Beispiel 1 angewendet, mit dem Unterschied, dass man den Luftstrom mit n-Heptan belastet.

**Tabelle 4**

| Zeitdauer [h] | Schadstoffkonzentration [mg/m³] | | | | | |
|---|---|---|---|---|---|---|
| | Zuluft | Ausgang Biofilter 1 | Abbau % | Ausgang Aktivkohle | Ausgang Biofilter 2 | Abbau % |
| 8 | 1140 | 980 | 14 | 540 | 400 | 65 |
| 15 | <10 | <10 | | 200 | 100 | |
| 7 | 1610 | 1310 | 19 | 780 | 610 | 62 |
| 70 | <10 | <10 | | 260 | 140 | |
| 3 | 1880 | 1880 | 0 | 1100 | 990 | 47 |
| 4 | <10 | <10 | | 340 | 300 | |
| 16 | 550 | 530 | 4 | 450 | 370 | 33 |
| 32 | 480 | 450 | | 480 | 440 | |
| 16 | <10 | <10 | | 50 | 40 | |
| 8 | 630 | 570 | 10 | 500 | 470 | 25 |
| 72 | 310 | 250 | 19 | 230 | 210 | 32 |
| 17 | 420 | 350 | 17 | 230 | 210 | 50 |
| 25 | 45 | <10 | | 130 | 110 | |
| 24 | 390 | 300 | 23 | 240 | 210 | 46 |
| * Bei den unterstrichenen Werten tritt auf der Aktivkohle Desorption ein. | | | | | | |

## Patentansprüche

1. Verfahren zur Entsorgung und Reinigung von mit Schadstoffen belasteter Abluft, wobei die Abluft durch eine Vorrichtung geleitet wird, welche ein aus einem Trägermaterial und Mikroorganismen bestehendes Biofiltermaterial und ein als Puffer wirkendes Adsorptionsmittel enthält, dadurch gekennzeichnet, daß die Abluft zuerst durch mindestens einen Puffer und anschließend durch mindestens einen Biofilter geleitet wird, wobei das Adsorptionsmittel und das Biofiltermaterial getrennt voneinander angeordnet sind.

2. Verfahren gemäss Anspruch 1, dadurch gekennzeichnet, dass die Abluft zuerst durch mindestens einen Biofilter, dann durch mindestens einen Puffer und anschliessend durch mindestens einen weiteren Biofilter geleitet wird.

3. Verfahren gemäss Anspruch 1, dadurch gekennzeichnet, dass die Abluft zuerst durch mindestens einen Puffer, dann durch mindestens einen Biofilter, anschliessend durch mindestens einen weiteren Puffer und letztlich durch mindestens einen weiteren Biofilter geleitet wird.

4. Verfahren nach einem der Ansprüche 1 bis 3, dadurch gekennzeichnet, dass die Abluft durch eine Vorrichtung zum Befeuchten der Biofilter geleitet wird.

5. Verfahren gemäss Anspruch 4, dadurch gekennzeichnet, dass die Vorrichtung zum Befeuchten vor der Vorrichtung aus Puffer und Biofilter angeordnet ist.

6. Verfahren nach einem der Ansprüche 1 bis 5, dadurch gekennzeichnet, dass die Abluft auf eine für die Mikroorganismen in den Biofiltern unschädliche Temperatur und Schadstoffkonzentration gebracht wird.

7. Verfahren nach einem der Ansprüche 1 bis 6, dadurch gekennzeichnet, dass pro m³ Biofiltervolumen und pro Stunde 1 m³ Abluft mit einer Schadstoffkonzentration von bis zu 50 g geleitet wird.

8. Verfahren gemäss Anspruch 1, dadurch gekennzeichnet, dass als Adsorptionsmittel Aktiv- oder Knochenkohle, Kieselgel, Kieselgur, Bleicherde, Aluminiumoxide, Molekularsiebe, Bauxit, Glas, Keramik oder ein Gemisch verwendet wird.

9. Verfahren gemäss Anspruch 8, dadurch gekennzeichnet, dass als Adsorptionsmittel Aktivkohle verwendet wird.

10. Verfahren nach einem der Ansprüche 1 bis 9, dadurch gekennzeichnet, dass es sich bei den Schadstoffen in der Abluft um organische oder anorganische Verbindungen oder um Mischungen handelt.

11. Verfahren gemäss Anspruch 10, dadurch gekennzeichnet, dass es sich bei den Schadstoffen um organische Verbindungen handelt.

12. Verfahren gemäss Anspruch 11, dadurch gekennzeichnet, dass es sich bei den organischen Verbindungen um Kohlenwasserstoffe oder halogenierte Kohlenwasserstoffe wie Alkane oder Cycloalkane mit 1 bis 12 Kohlenstoffatomen, oder um Aromaten, Aldehyde, Ketone, Ether, Carbonsäureester, Sulfone, Alkohole, Thiole, Nitro-oder Aminoverbindungen oder um Gemische handelt.

13. Verfahren gemäss Anspruch 12, dadurch gekennzeichnet, dass es sich bei den organischen Verbindungen um Butan, Pentan, Octan, Heptan, Cyclohexan, Cyclooctan, Dekalin, Methylenchlorid, Benzol, Toluol, Phenol, Xylol, Chlorbenzol, Dichlorbenzol, Aceton, Dioxan, Sulfolan, Tetrahydrofuran, Methylisobutylketon, Methanol, Ethanol, Butanol, Pyridin, Dimethylformamid, Acetonitril oder um Gemische handelt.

14. Vorrichtung zur Durchführung des Verfahrens gemäß Anspruch 1, gekennzeichnet durch mindestens einen Puffer und mindestens einen nachgeschalteten Biofilter, wobei das als Puffer wirkende Adsorptionsmittel und das aus Trägermaterial und Mikroorganismen bestehende Biofiltermaterial getrennt voneinander angeordnet sind.

15. Vorrichtung gemäss Anspruch 14, gekennzeichnet durch ein Trägermaterial aus Kompost, Torf, Erde, Holzschnitzel, Pflanzenreste wie Reisig, Stroh, Baumrinde oder Heidekraut, oder ein Gemisch davon.

16. Vorrichtung gemäss einem der Ansprüche 14 und 15, dadurch gekennzeichnet, dass einer oder mehrere Puffer vor und/oder zwischen einem oder mehreren Biofiltern angeordnet sind.

17. Vorrichtung gemäss einem der Ansprüche 15 bis 16, dadurch gekennzeichnet, dass mehrere Biofilter vor dem Puffer parallel geschaltet oder schubladenartig angeordnet sind.

## Claims

1. A process for the disposal and purification of waste air loaded with pollutants, the waste air being passed through a device which contains a biofilter material consisting of a carrier material and microorganisms and an adsorbent acting as buffer, which comprises first passing the waste air through at least one buffer and subsequently through at least one biofilter, the adsorbent and the biofilter material being located separately from one another.

2. A process according to claim 1, which comprises passing the waste air first through at least one biofilter, then through at least one buffer and subsequently through at least one further biofilter.

3. A process according to claim 1, which comprises passing the waste air first through at least one buffer, then through at least one biofilter, subsequently through at least one further buffer and finally through at least one further biofilter.

4. A process according to any one of claims 1 to 3, which comprises passing the waste air through a device for moistening the biofilters.

5. A process according to claim 4, wherein the device for moistening is located upstream of the device comprising buffer and biofilter.

6. A process according to any one of claims 1 to 5, which comprises bringing the waste air to a temperature and pollutant concentration which are harmless to the microorganisms in the biofilters.

7. A process according to any one of claims 1 to 6, wherein 1 m³ of waste air of a pollutant concentration of up to 50 g is passed through per m³ of biofilter volume per hour.

8. A process according to claim 1, wherein the adsorbent used is active charcoal or animal charcoal, silica gel, kieselguhr, bleaching earth, an alumina, a molecular sieve, bauxite, glass, ceramics or a mixture.

9. A process according to claim 8, wherein the adsorbent used is active charcoal.

10. A process according to any one of claims 1 to 9, wherein the pollutants in the waste air are organic or inorganic comopunds or mixtures.

11. A process according to claim 10, wherein the pollutants are organic compounds.

12. A process according to claim 11, wherein the organic compounds are hydrocarbons or halogenated hydrocarbons such as alkanes or cycloalkanes having 1 to 12 carbon atoms, or aromatics, aldehydes, ketones, ethers, carboxylic acid esters, sulfones, alcohols, thiols, nitro compounds or amino compounds, or mixtures.

13. A process according to claim 12, wherein the organic compounds are butane, pentane, octane, heptane, cyclohexane, cyclooctane, decalin, methylene chloride, benzene, toluene, phenol, xylene, chlorobenzene, dichlorobenzene, acetone, dioxane, sulfolane, tetrahydrofuran, methyl isobutyl ketone, methanol, ethanol, butanol, pyridine, dimethylformamide, acetonitrile or mixtures.

14. Equipment for carrying out the process according to claim 1, comprising at least one buffer and at least one biofilter connected downstream, the adsorbent acting as buffer and the biofilter consisting of carrier material and microorganisms being located separately from one another.

15. Equipment according to claim 14, comprising a carrier material consisting of compost, peat, earth, wood chips, plant residues such as brushwood, straw, bark or heather, or a mixture thereof.

16. Equipment according to either of claims 14 and 15, wherein one or more buffers are provided upstream of and/or between one or more biofilters.

17. Equipment according to either of claims 15 and 16, wherein, upstream of the buffer, several biofilters are connected in parallel or arranged in the manner of a chest of drawers.

## Revendications

1. Procédé d'élimination et de purification d'air vicié chargé de substances polluantes, l'air vicié circulant dans un dispositif qui contient un biofiltre constitué d'un matériau-support et de microorganismes ainsi qu'un adsorbant agissant comme tampon, caractérisé par le fait que l'on fait d'abord passer l'air vicié à travers au moins un tampon puis à travers au moins un biofiltre, l'adsorbant et le biofiltre étant séparés l'un de l'autre.

2. Procédé selon la revendication 1, caractérisé par le fait que l'on fait d'abord passer l'air vicié à travers au moins un biofiltre, puis à travers au moins un tampon et enfin à travers au moins un biofiltre supplémentaire.

3. Procédé selon la revendication 1, caractérisé par le fait que l'on fait d'abord passer l'air vicié à travers au moins un tampon, puis à travers au moins un biofiltre, à travers au moins un tampon supplémentaire et enfin à travers au moins un biofiltre supplémentaire.

4. Procédé selon l'une des revendications 1 à 3, caractérisé par le fait que l'on fait passer l'air vicié à travers un dispositif d'humidification des biofiltres.

5. Procédé selon la revendication 4, caractérisé par le fait que le dispositif d'humidification est placé en amont du dispositif formé du tampon et du biofiltre.

6. Procédé selon l'une des revendications 1 à 5, caractérisé par le fait que l'on amène l'air vicié à une température et à une concentration de substances polluantes qui ne sont pas nuisibles aux microorganismes des biofiltres.

7. Procédé selon l'une des revendications 1 à 6, caractérisé par le fait que, par m³ de volume de biofiltre et par heure, on amène 1 m³ d'air vicié avec une concentration de substances polluantes allant jusqu'à 50 g.

8. Procédé selon la revendication 1, caractérisé par le fait que l'on utilise comme adsorbant du charbon actif ou du charbon animal, du gel de silice, du kieselguhr, de la terre à blanchir, des oxydes d'aluminium, des tamis moléculaires, de la bauxite, du verte, de la céramique ou leur mélange.

9. Procédé selon la revendication 8, caractérisé par le fait qu'on utilise du charbon actif comme adsorbant.

10. Procédé selon l'une des revendications 1 à 9, caractérisé par le fait que les substances polluantes contenues dans l'air vicié sont des composés organiques ou minéraux ou des mélanges de ceux-ci.

11. Procédé selon la revendication 10, caractérisé par le fait que les substances polluantes sont des composés organiques.

12. Procédé selon la revendication 11, caractérisé par le fait que les composés organiques sont des hydrocarbures ou des hydrocarbures halogénés tels que des alcanes ou des cycloalcanes avec 1 à 12 atomes de carbone, des substances aromatiques, des aldéhydes, des cétones, de l'éther, de l'ester carbonique, des sulfones, des alcohols, des thiols, des composés nitro- ou amino- ou leurs mélanges.

13. Procédé selon la revendication 12, caractérisé par le fait que les composés organiques sont le butane, le pentane, l'octane, l'heptane, le cyclohexane, le cyclooctane, la décaline, le chlorure de méthylène, le benzène, le toluène, le phénol, le xylène, le chlorobenzène, le dichlorobenzène, l'acétone, le dioxane, le sulfolane, le tétrahydrofuranne, le méthylisobutylcétone, le méthanol, l'éthanol, le butanol, la pyridine, le diméthylformamide, l'acéto-nitrile ou leurs mélanges.

14. Dispositif pour la mise en oeuvre du procédé selon la revendication 1, caractérisé par au moins un tampon et au moins un biofiltre placé derrière celui-ci, l'adsorbant agissant comme tampon et le biofiltre constitué de matériau support et de microorganismes étant séparés l'un de l'autre.

15. Dispositif selon la revendication 14, caractérisé par un matériau support formé de compost, de tourbe, de terre, de copeaux de bois, de déchets végétaux tels que des brindilles, de la paille, de l'écorce ou de la bruyère ou d'un mélange de ceux-ci.

16. Dispositif selon l'une des revendications 14 et 15, caractérisé par le fait qu'un ou plusieurs tampons sont disposé en amont et/ou entre un ou plusieurs biofiltres.

17. Dispositif selon l'une des revendications 15 à 16, caractérisé par le fait que plusieurs biofiltres sont placés en parallèle ou disposés en tiroir en amont du tampon.
